# EUROPÄISCHE PATENTSCHRIFT

(11) **EP 1 985 851 B1**
(45) Veröffentlichungstag und Bekanntmachung des Hinweises auf die Patenterteilung: **25.05.2011**
(21) Anmeldenummer: 08159249.5
(22) Anmeldetag: 15.03.2004
(51) Int. Cl.: F03G 6/06

(54) **Vorrichtung zur Speicherung von Wärmeenergie**
Device for storing heat energy
Dispositif destiné au stockage d'énergie calorifique

(43) Veröffentlichungstag der Anmeldung: 29.10.2008
(62) Teilanmeldung aus: 04720568.7
(73) Patentinhaber: Üstün, Orhan, 8180 Bülach (CH)
(72) Erfinder: Üstün, Orhan, 8180 Bülach (CH)
(74) Vertreter: Liebetanz, Michael

(56) Entgegenhaltungen:
- DE-A1- 10 061 119
- DE-A1- 10 208 928
- DE-A1- 19 924 876
- US-A- 4 628 692
- US-A- 4 788 823

## Beschreibung

Die Erfindung betrifft eine Vorrichtung zur Speicherung von Wärmeenergie mit den Merkmalen des Oberbegriffs des Anspruchs 1.

Aus dem Stand der Technik sind verschiedene Insellösungen für die Erzeugung von elektrischer Energie bekannt. Diese umfassen häufig Photovoltaik-Module zur Erzeugung von elektrischer Energie, die anschliessend in Akkumulatoren gespeichert wird. Eine andere Insellösung sind auch Kraftfahrzeuge, bei denen eine Batterie über einen Generator aufgeladen wird, der über einen Keilriemen vom Motor angetrieben wird, der das Fahrzeug bewegt.

Bei heutigen Hybridmotor-Fahrzeugen wird neben dem Verbrennungsmotor wie bekannt als Antriebsunterstützung ein Elektromotor/Generator eingebaut, der die notwendige elektrische Energie von Batterien bezieht. Im Generatorbetrieb werden diese als Pufferspeicher aufgeladen. Die Anzahl dieser Batterien sind wegen ihrem Platzbedarf und vor allem wegen ihrem hohen Gewicht im Fahrzeug sehr stark eingeschränkt, was wiederum die Reichweite des Fahrzeugs stark reduziert. Ausserdem sind die Batterien umweltbelastend (Entsorgung) und haben eine relativ kurze Lebensdauer.

Eine Vorrichtung mit den Merkmalen des Oberbegriffs des Anspruchs 1 ist aus der US 4,628,692 bekannt. Eine Speicherfunktion mit einer Umkehrung des Hydromotors zum Antreiben eines Generators, wenn kein Wärmeeintrag vorliegt, ist nicht vorhanden.

Eine weitere solche Vorrichtung ist aus der DE 100 61 119 bekannt, die über eine kolbengetriebene Zahnstange einen Generator zur Stromerzeugung antreibt, wobei der Druckausgleich über einen sogenannten druckarmen Speicher durchgeführt wird.

Ausgehend von diesem Stand der Technik liegt der Erfindung die Aufgabe zugrunde, eine Vorrichtung der eingangs genannten Art anzugeben, die ein besseres Nutzungsverhältnis der eingesetzten Energie aufweist.

Ein weiteres Ziel der Erfindung liegt darin, eine Vorrichtung anzugeben bei der die Wärmeenergie zwischengespeichert werden kann, insbesondere um die nach bekannten Lösungen notwendigen Akkumulatoren einzusparen oder zumindest in geringerer Kapazität vorsehen zu können.

Diese Aufgabe wird erfindungsgemäss mit den Merkmalen des Anspruchs 1 gelöst.

Eine erfindungsgemässe Vorrichtung nutzt eine Energiewandlungseinrichtung, die mit dem Druckspeicher des Wärmeeintrags- und Druckspeichermoduls zum Austausch von Fluid verbunden ist. Beispielsweise ein Hydromotor kann dann den anliegenden Fluiddruck aus dem Wärmeeintrags- und Druckspeichermodul in eine andere Energieform als potentielle Energie umwandeln. Damit werden Nachteile von konventionellen akkumulatorbasierten Insellösungen in einfacher mechanischer Weise umgangen.

Bekannte Fahrzeuge mit aufwendiger Hybridtechnologie werden nach der Erfindung durch eine einfachere Technologie mit lange bewährten Bauteilen ersetzt.

Weitere vorteilhafte Ausgestaltungen sind in den Unteransprüchen gekennzeichnet.

Die Erfindung wird nun unter Bezugnahme auf die beigefügten Zeichnungen an Hand von einem Ausführungsbeispiel beispielhaft näher beschrieben. Es zeigen:
- Fig. 1: ein Blockschaltbild einer Vorrichtung zur Wärme-Kraft-Kopplung nach einem ersten Ausführungsbeispiel der Erfindung,
- Fig. 2: ein Blockschaltbild mit mehreren Solarkollektor- und Druckspeichermodulen nach Fig. 1, und
- Fig. 3: ein Blockschaltbild einer Vorrichtung zur Wärme-Kraft-Kopplung nach einem zweiten Ausführungsbeispiel der Erfindung.

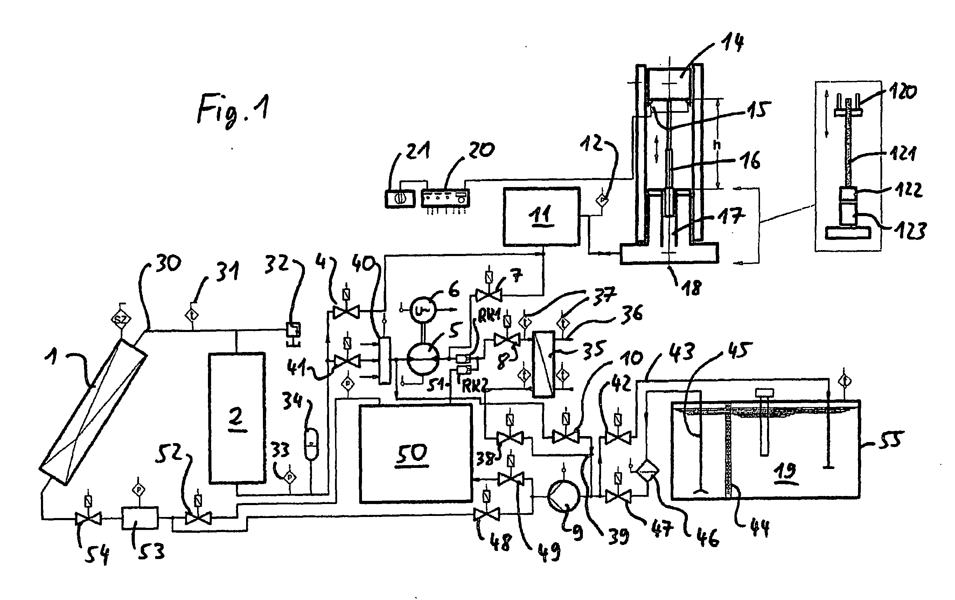

Die Fig. 1 zeigt ein Blockschaltbild einer Vorrichtung zur Wärme-Kraft-Kopplung nach einem Ausführungsbeispiel der Erfindung. Dabei zeigt die Fig. 1 ein Ausführungsbeispiel mit einer potentiellen Energiespeicherung von Solarenergie. Die nachfolgend genannten Prinzipien können auch bei anderen Ausführungsbeispielen umgesetzt werden, wie dies im Nachhinein aufgezeigt werden wird.

Die Vorrichtung nach Fig. 1 umfasst einen Solarkollektor 1, der von einem Fluid durchflossen wird, welches durch die einwirkende Sonneneinstrahlung aufgewärmt wird. Die eingestrahlte solare Wärmeenergie wird im Solarkollektor 1 durch das besagte Fluid aufgenommen, so dass sich dessen Temperatur erhöht. Die üblicherweise damit verbundene volumenmässige Ausdehnung wird durch das Rohrsystem 30 vermieden und in einen steigenden Druck umgewandelt. Der Temperaturfühler 31 ist mit der elektronischen Steuerung 20 der Vorrichtung verbunden und dient zur Sicherheit und Überprüfung der Vorrichtung. Das Element SZ am Solarkollektor ist eine Solarzelle zur Erfassung von schnellen Intensitätsänderungen der einfallenden Strahlung. Das Fluid wird durch die Rohrleitung 30 in den Speicher 2 geleitet und dort als Druckenergie vorgespeichert. Das Druckbegrenzungsventil 32 schützt die Vorrichtung vor einem über den Spezifikationen liegenden Überdruck und leitet gegebenenfalls das Fluid direkt in den Speicher 19 ab.

Das Steuer- und Regelungsgerät 20 überwacht die ganze Vorrichtung und dabei umfassend die Schalterstellung des Schalters 21. Wenn der Schalter 21 nicht auf die Position mit der Priorität "Strom und Wärme erzeugen" gestellt ist und die Systembedingungen (insbesondere aber nicht ausschliesslich können überprüft werden: Ventilzustände, Temperaturen und Drücke, Selbsttest des Steuergerätes etc.) erfüllt sind, leitet das Absperrventil 4 die Druckenergie in den Pufferspeicher 11. Das Ventil 4 wird abgeschaltet, wenn der Druckwert des Speichers 2 (P2) kleiner als der Druckwert des Pufferspeichers 11 (P11) ist. Das Steuer/Regelgerät 20 schaltet das Ventil 4 erst wieder ein, das heisst öffnet es, wenn die Druckbedingung Druckwert des Speichers 2 (P2) grösser als der Druckwert des Pufferspeichers 11 (P11) erfüllt ist. Die Druckenergie wird in die Kolbenkammer 17 des Hydraulikgehäuses 18 weitergeleitet und die resultierende Druckkraft treibt das Gewicht 14 mit Hilfe eines Hubkolben 16 nach oben, solange die Kräftebedingung Kraft des Kolbens 17 (K17) grösser als Kraft des Gewichts 14 (K14) erfüllt ist. Wenn K17 = K14 wird, wird das Ventil 4 abgeschaltet, das heisst geschlossen. Vorteilhafterweise rastet das Gewicht 14 mit Hilfe von einklinkenden Rastelementen 15 (zum Beispiel über Elektro-Hubmagnete) in den beiden das Gewicht 14 führenden Führungsschienen 13 schrittweise ein (Sägezahn-Absicherung).

Als alternative Lösung kann auch die im rechten Kasten der Fig. 1 angedeutete Hubvorrichtung 120, bestehend aus der Gewindeleitstange 121 und dem Hydromotor 123 mit dem angeflanschten Untersetzungsgetriebe 122 eingesetzt werden.

Ferner kann auch eine drehmomentspeichernde Vorrichtung angeschlossen sein, mit der ein Schwungrad angetrieben wird.

Das gehobene Gewicht 14 kann auch durch eine in die Höhe gepumpte Flüssigkeit ersetzt werden, wobei dann diese den Generator 6 in einer anderen Anschaltung direkt antreiben könnte. Insbesondere kann dafür auch der Hydromotor 5 als eine Hydro-Pumpen/Motor-Kombination eingesetzt werden.

Wesentlich ist bei dieser Umsetzung eines Ausführungsbeispiels, dass die in Form von Druck vorliegende Wärmeenergie in potentielle Energie umgewandelt wird. Dabei kann es sich um Prinzip um verschobene Massen, gespannte Federn, komprimierte Gasvolumina oder andere Ausgestaltungen von potentieller Energie handeln.

Wenn der Schalter 21 dagegen auf die alternative Position mit "abwechselndem Betrieb" gestellt ist, dann wird je nach unten genannter erfüllter Bedingung zwischen den beiden Betriebsarten, die oben erwähnt sind, umgeschaltet. In anderen Worten, wenn die Strom- und Wärmeerzeugung zeitweise von dem Betreiber der Anlage nicht gebraucht wird, wechselt das Steuer/Regel-Gerät 20 immer automatisch in die Betriebsart "Energiespeicherung", um möglichst viel potentielle Energie, beispielsweise für die Nachtstromerzeugung, zu produzieren.

Am Abend oder zum Beispiel je nach Lichtbedarf, wenn ein Elektrogerät eingeschaltet wird, meldet ein entsprechender Sensor dem Steuer/Regelgerät 20 den Bedarf und schaltet nach einer vorgehenden Prüfung der Sicherheitsfunktionen (entsprechend den oben genannten, beispielsweise Druck, Temperatur und Ventilzustände) die beiden einklinkenden Rastelemente 15 bedarfsorientiert zyklisch frei. Das hier sinkende Gewicht 14 drückt auf die Kolbenkammer 17 und erzeugt dadurch Druckenergie.

Wenn bestimmte Betriebsbedingungen (insbesondere Bereitschaft der Wechselrichter und Schaltzustand des Elektroverteilerkastens) erfüllt sind, leitet das Absperrventil 7 das unter Druck stehende Fluid zum Hydromotor 5. Er treibt den Generator 6 an, womit Elektrizität erzeugt wird. Anschliessend wird die so erzeugte elektrische Energie in einem Hochleistungs-Kondensatorspeicher gepuffert und geglättet. Die Sinkgeschwindigkeit des Gewichts 14 ist von der dem System entnommenen elektrischen Energiemenge abhängig.

Zusammenfassend können die folgenden Vorteile dieser Vorrichtung genannt werden. Das oben beschriebene Ausführungsbeispiel ermöglicht eine optimale Lösung zur Speicherung der mit Hilfe der Sonne gewonnenen Energie in Gestalt einer temporären Energiespeicherung. Sie ersetzt zuverlässig und wirtschaftlich bei allen Inselanlagen die herkömmlichen elektrischen Batterien und vermeidet deren Nachteile, die insbesondere sind:
- sie sind umweltbelastend (ätzende Gasbildung, schwermetallhaltig etc.),
- die Entsorgung ist aufwendig (energieaufwendig und damit kostenintensiv),
- sie werden bei höheren Kapazitäten (beispielsweise mehr als 50 Ah) sehr schwer (25 bis über 100 Kilogramm) und unhandlich),
- sie brauchen für grössere elektrische Leistung viel Platz,
- sie brauchen Wartung, bei grösseren Inselanlagen periodische Wartung,
- ihre spezifische Leistungsdichte bezogen auf Gewicht oder Volumen ist relativ gering (W/kg),
- ihre Lebensdauer ist stark von der Anzahl der Lade/Entladezyklen abhängig,
- ihre Lebensdauer ist sehr stark von der entnommenen Strommenge abhängig,
- sie sind relativ teuer,
- wenn eine defekte Batterie vorzeitig ersetzt wird, dann wird diese neue Batterie von den anderen systembedingt "gealtert".

Weitere Vorteile des Einsatzes von Solarkollektoren zu Energiespeicherung sind:
- es wird die kostenlose Solarenergie benutzt,
- verglichen mit herkömmlichen Batterien entstehen fast keine Umweltbelastungen,
- der "praktische" Wirkungsgrad um mehr als 100% besser als der einer Batterie,
- auch bei grossen Leistungen wird relativ wenig Platz benötigt,
- die Vorrichtung braucht wenig Wartung, sie ist zuverlässig,
- ihre spezifische Leistungsdichte ist gross,
- sie hat grosse Lebensdauer (> 20 Jahre),
- ihre Lebensdauer ist praktisch nicht von der herrschenden Belastung abhängig,
- die Vorrichtung ist mit lange bewährten Komponenten preisgünstig realisierbar,
- das Kosten/Nutzen-Verhältnis ist sehr gross,
- es entsteht ein echter Umweltschutzbeitrag mit relativ geringem Aufwand.

Die vom Rohrsystem 30 aufgenommene Flüssigkeit, die über den Vakuumröhren-Solarkollektor 1aufgewärmt wird, wird dadurch auf eine höhere Temperatur und einen höheren Druck gebracht. Dabei besteht auch ein mit dem Steuer- und Regelgerät 20 verbundener Druckmesser 33. Die Flüssigkeit wird neben dem Rohrsystem und dem Speicher 2 auch in einem Blasenspeicher 34 zur Vermeidung von hydraulischen Schlägen aufgenommen.

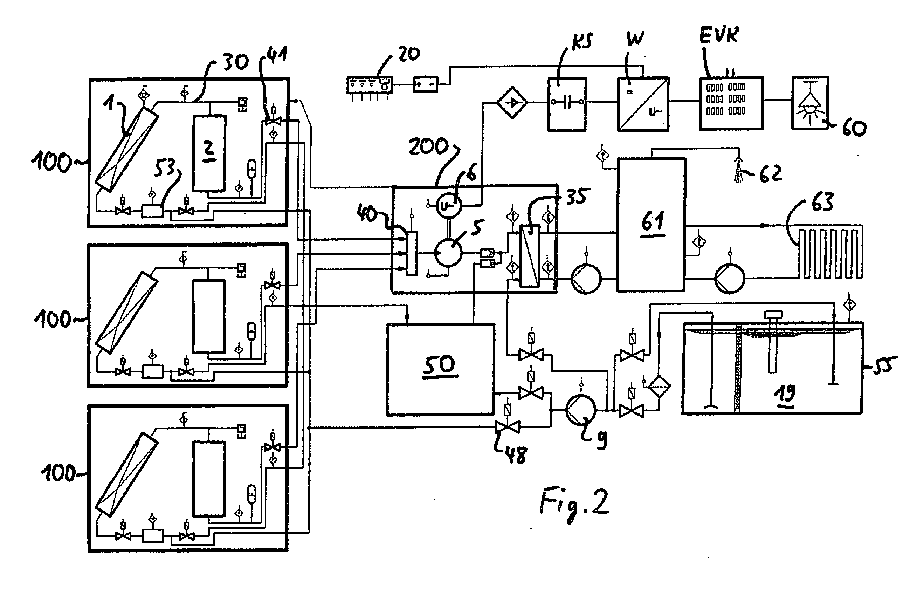

Beim Betrieb des Hydromotors 5 ist auf folgende Details zu achten. Das Schluckvolumen oder Hubvolumen des Hydromotors 5 ist auf die Speicherkapazität der Vorrichtung abzustellen (siehe auch die skalierende Wirkung der Schaltungen nach Fig. 2). Der Hydromotor 5 betreibt den Generator 6, hinter dem in üblicher Weise (in den Zeichnungen nicht dargestellt, in Fig. 2 Kondensatorspeicher KS) Kondensatoren zur Glättung und Stabilisierung des erzeugten Stroms angeordnet sind. Neben den Verbrauchern können eine oder mehrere Stützbatterien als Notstromversorgung vorgesehen sein, insbesondere, um die Anlaufzeit der Vorrichtung zu überbrücken. Die Systemspannung kann durch ein eigenes 24-Voltsystem bereitgestellt werden, wobei dieses 24-Voltsystem vorteilhafterweise durch die Vorrichtung aufgeladen wird.

Nach Verlassen des Hydromotors fliesst das Öl durch eine Rückschlagklappe RK1 in einen Wärmetauscher 35, durch den über Rohre 36 ein anderes Fluid kalt zugeführt und erwärmt weggeführt wird. Temperaturfühler 37 (es sind vier zur Messung der Temperaturdifferenzen) sind mit der Steuereinheit 20 verbunden und steuern unter anderem auch das nachfolgende Ventil 38. Am Kreuzungspunkt 39 trifft eine über das Umleitventil 10 direkt vor dem Hydromotor 5 abgeleitete Verrohrung auf die durch dem Wärmetauscher gelaufene Flüssigkeit.

Wenn die Druckverhältnisse vor und hinter dem Hydromotor 5 gleich sind, dann schliesst das Ventil 41 vor der Verteilereinheit 40. Die Ventile sind vorteilhafter Weise jeweils elektromagnetisch betriebene Ventile.

Vorteilhafterweise wird die Anlage durch einen zwei Alternativen bietenden Schalter 21 gesteuert, entweder wird Energie gespeichert oder es wird Strom/Wärme produziert.

Über ein Ventil 42 und ein Rücklaufrohr 43 fliesst die Flüssigkeit in eine Rücklaufkammer 19 vom Sammelbehälter 55. Dieser Behälter 55 ist durch ein Beruhigungsblech 44 in zwei Teile geteilt, wobei in der zweiten Kammer, der Ansaugkammer ein Ansaugrohr 45 die beruhigte Flüssigkeit aufnimmt und über einen Filter 46 und ein Schaltventil 47 zur Umwälzpumpe 9 führt.

Die Umwälzpumpe 9 ist ausgangsseitig mit zwei Ventilen 48 und 49 verbunden, wobei sie die warme Flüssigkeit über das Ventil 49 in den Sekundärspeicher 50 leitet, von dem die Flüssigkeit über die Leitung 51 im Kreislauf durch den Wärmetauscher 35 geführt wird, bis die Flüssigkeit abgekühlt ist und das nötige Druckgefälle hinter dem Hydromotor absinkt. Dann wird die Umwälzpumpe 9 abgeschaltet. Die Elektromagnetventile 38, 42 öffnen sich, während alle andere benachbarten Ventile 10, 47, 48, 49 zu bleiben. Die weitgehend vorgekühlte Flüssigkeit entspannt sich weiter und fliesst in die Rücklaufkammer 19.

Die Umwälzpumpe 9 wird erst dann abgeschaltet, wenn die Temperaturdifferenz im Sekundärkreis des Wärmetauschers 35 einen vorbestimmten unteren Wert erreicht hat. Die Laufzeit der Umwälzpumpe 9 hängt insbesondere von den verwendeten Flüssigkeiten ab; so ist die spezifische Wärme von Öl im Primärkreis halb so gross wie die des Wassers im Sekundärkreis des Wärmetauschers 35.

Nach Öffnen des Ventils 52, wenn im Pufferspeicher und im Primärspeicher 2 Flüssigkeit bzw. der nötige Vordruck unter einen bestimmten Wert gesunken sind, steht der Sekundärspeicher 50 über einen Pufferspeicher 53 und ein weiteres Ventil 54 mit dem Solarkollektormodul 1 in Verbindung.

Es gibt zwei Zustände, einen Kaltzustand und einen Warmzustand. Im Kaltzustand ist in den Elementen 53, 1 und 2 Flüssigkeit vorhanden. Die Ventile 49, 48, 38, 10 und 42 pumpenseitig und die Ventile 52, 54, 41, 4 kollektorseitig sind geschlossen. Das Steuer-/Regelgerät 20 macht zuerst das Ventil 47 auf. Zeitlich kurz danach, nachdem der minimale statische Vordruck der Pumpe 9 erreicht ist, wird die Pumpe 9 und mit kurzer Verzögerung Ventil 48 eingeschaltet. Die Flüssigkeit dringt in den Behälter 53; nach einer kurzen Verzögerung wird Ventil 54 aufgemacht. Anschliessend öffnen nacheinander die Ventile 41, 8, 38 und in der genannten Reihenfolge gehen die Ventile 48 und 47 zu, wobei gleichzeitig die Pumpe 9 ausgeschaltet wird. Während die Flüssigkeit über Hydromotor 5, Rückschlagklappe RK1, Ventil 8, Wärmetauscher 35 und Ventil 38 zum Kreuzpunkt 39 fliesst, wird Ventil 42 eingeschaltet. Ein Teil der Flüssigkeit fliesst dann in den Sammelbehälter 55 zurück. Dieser Vorgang wiederholt sich in kurzen Abständen beispielsweise circa drei bis fünf mal und ermöglicht eine einwandfreie Entlüftung der Anlage in der Startphase.

Im Warmzustand fördert die Pumpe 9 via Sekundärspeicher 50 den fehlenden Flüssigkeitsanteil vom Primärspeicher 2, der diesen über den Hydromotor 5 abgegeben oder "verloren" hat. Die Ventile 38, 10, 42, 47, 49, 48, 52, 54 und 41 sind zu. Das Steuer-/Regelgerät 20 schaltet zuerst das Ventil 47 und anschliessend die Pumpe 9 ein. Nachher werden zeitlich nacheinander die Ventile 49, 52, 54, 41, 8 und 38 in dieser Reihenfolge eingeschaltet. Die relativ warme Flüssigkeit fliesst vom Sekundärspeicher 50 in die Behälter 53, 1 und 2. Der Sekundärspeicher 50 wird gleichzeitig via Ventil 49 vom Sammelbehälter 55 ergänzt. Dieser intermittierende Ladevorgang dauert so lange, bis die Druckwerte im Primärspeicher 2 und im Sekundärspeicher 50 gleich sind. Nachher werden die Ventile 41, 54, 52, 48, 49, 38, die Pumpe 9 und das Ventil 47 nacheinander ausgeschaltet. Die Flüssigkeit, die in den Behältern 1 beziehungsweise 2 vorhanden ist, kann durch Solarstrahlung wieder aufgeheizt werden, um expandiert einen neuen Zyklus zu ermöglichen.

Dieses Betriebsverfahren bringt auch den Vorteil, dass die nötige Aufwärmung der Volumina in 1 und 2 je nach Strahlungsart beschleunigt werden, beziehungsweise die Pausen des Hydromotors 5 kürzer werden.

Bei hoher Einstrahlung wird der Kreislauf über Speicher 50 und Wärmetauscher 35 länger geöffnet, um ein höheres Druckgefälle aufzubauen. Bei geringer Einstrahlung wird wärmeres Fluid im Speicher 50 belassen, um die dann langsamere Aufheizung im Kollektor 1 in kürzerer Zeit zu bewerkstelligen.

Die Funktionsweise dieser Vorrichtung ist intermittierend; der Hydromotor 5 kann nur dann betrieben werden, beziehungsweise die Speicherung über die potentielle Energie 14 kann nur dann voran getrieben werden, wenn über den Solarkollektor ein entsprechender Druck aufgebaut worden ist. Je grösser die Wärmeeinstrahlung ist, desto schneller können die Zyklen einander folgen.

Die Fig. 2 zeigt ein Blockschaltbild mit mehreren Solarkollektor- und Druckspeichermodulen, welches insbesondere bei schwacher Energieeinstrahlung von beispielsweise 50 bis 500 Watt pro Quadratmeter eingesetzt werden kann.

In Fig. 2 sind drei Solarkollektor- und Druckspeichermodule 100 dargestellt, die alle jeweils einen Solarkollektor 1 und einen Druckspeicher 2 mit der entsprechenden Verrohrung und Beschaltung nach Fig. 1 aufweisen. Ausgangsseitig ist das Ventil 41 wesentlich. Alle Ventile 41 der verschiedenen Module 100 sind mit verschiedenen Eingängen der Verteilereinheit 40 verbunden. Zusammen mit Hydromotor 5, Generator 6 und Wärmetauscher 35 bildet diese Einrichtung ein Wandlungsmodul 200.

In der Fig. 2 ist anstelle einer Speichervorrichtung für potentielle Energie in Form von mechanischer Energie eine übliche Verbraucherschaltung dargestellt, die letztendlich einen Verbraucher 60 betreibt. Mit dem Bezugszeichen 61 ist ein Heizungsspeicher mit integriertem Boiler bezeichnet, dessen gewärmtes Wasser als Dusche 62 abgegeben oder/und durch Heizelemente 63 fliessen kann. Insbesondere nur einmal vorgesehen ist die Rücklaufkammer 19 und der Sekundärspeicher 50.

Durch die Serienschaltung der einzelnen Module 100 wird erreicht, dass der Hydromotor 5 kontinuierlich durchlaufen kann. Die Anzahl der Module 100 ist natürlich frei skalierbar. Dabei kann die Steuerschaltung 20, die auch die Module 100 steuert, immer das Modul auswählen durch Öffnen des Ventils 41 dessen Druck nach Massgabe des Druckmessers 33 jeweils am grössten ist.

Je höher die Temperatur des Fluids ist, desto kleiner wird der Wirkungsgrad des Kollektors 1. Die höchste Betriebstemperatur wird daher im Bereich 80 bis 95 begrenzt werden. Vorteilhafterweise werden bei ausreichender Einstrahlung von 800 bis 1000 Watt je Quadratmeter die hier drei Module 100 überlappend betrieben, das heisst, dass sich die Betriebsphasen (=Freigabe des Ventils 41) überschneiden. Dann ist es wesentlich, dass der Wärmetauscher 35 die Temperatur der Flüssigkeit schnell genug abbauen kann, so dass die Aufbereitungszeiten möglichst kurz werden. Der Fachmann wird die Regelung so einstellen, dass die Messwerte des Druckgefälles, der Fluidtemperatur, der Stromstärke, der Temperatur-Differenz (Kühlung) von der Wärmeabfuhr im richtigen Verhältnis für einen kontinuierlichen Betriebsablauf eingestellt sind. Bei geringeren Einstrahlungswerten können Solarkollektoren mit geringerer Fluidaufnahme und somit reduzierter Strömungsgeschwindigkeit einsetzen.

Bei circa 4,5 Quadratmeter Solarkollektorfläche 1 bekannter Bauart in drei Modulen 100 besteht eine thermische Anschlussleistung von 3,3 Kilowatt und eine elektrische Anschlussleistung von 1,3 Kilowatt mit 1,5 Kilowatt in der Spitze. Die jährliche 230 Volt-Wechselstromproduktion kann 1500 Kilowattstunden betragen.

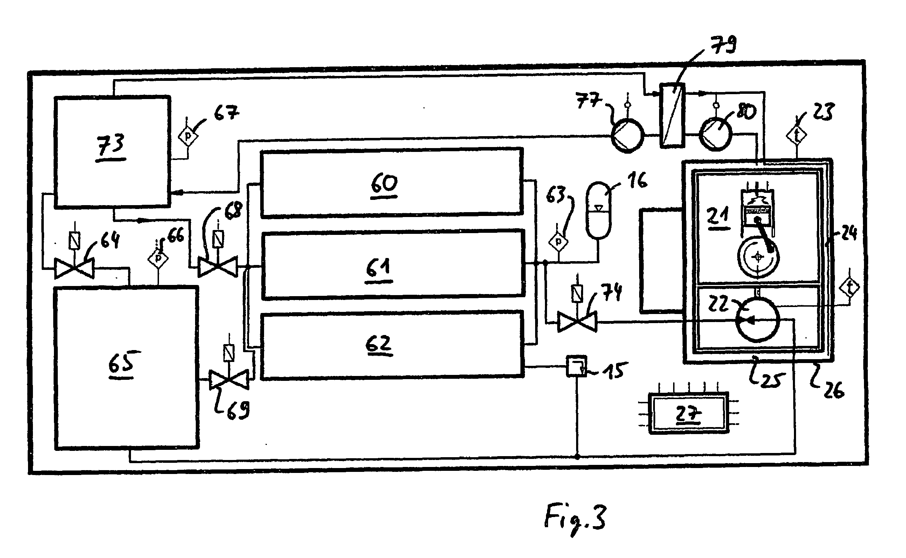

Die Fig. 3 zeigt ein Blockschaltbild einer Vorrichtung zur Wärme-Kraft-Kopplung nach einem zweiten Ausführungsbeispiel der Erfindung. Dieses andere hier dargestellte Ausführungsbeispiel betrifft die Energieerzeugung mit der Verlustwärme von einem Verbrennungsmotor und der Verzögerungsenergie vom einem Kraftfahrzeug. Dabei wird anstelle eines Solarkollektors ein Verbrennungsmotor eines Kraftfahrzeugs eingesetzt.

Die Energieerzeugung erfolgt dabei mit der Abwärme von einem Verbrennungsmotor als die einen Wärmeeintrag übermittelnde Einrichtung.

Es ist eine bekannte Tatsache, dass 60 bis 70% der verbrauchten Kraftstoffmenge bei heutigen Verbrennungsmotoren als Abstrahlungswärme verloren geht. Neben den Kosten für diese nicht in der Fortbewegung dienenden Energie umgesetzten Kraftstoffe treten Folgen als Klimaerwärmung und seine unüberblickbaren Nebenerscheinungen als Naturkatastrophen auf.

Der in der Fig. 3 dargestellte Hybridmotor 24 besteht aus den Antriebskomponenten des bekannten Verbrennungsmotors 21 mit Gas- , Benzin-, Dieselkraftstoff oder alternativen Brennstoffen wie Raps etc. und als Antriebsunterstützung dem Hydromotorantrieb 22. Das gemeinsame Getriebe 18 vereint die beiden Antriebe und synchronisiert sie.

Die die beiden Einheiten 21 und 22 umgebende Wärmeisolierung 26 verhindert im Gegensatz zum herkömmlichen Verbrennungsmotor die Abstrahlungsverluste weitgehend. Die in der Wärmeisolierung 26 eingebundene Wärmeträgerflüssigkeit 25 speichert einen grossen Anteil der Verbrennungswärme. Ab einer bestimmten Temperatur, die durch den Temperaturfühler 23 feststellbar ist, wird die in der Wärmeträgerflüssigkeit 25 gespeicherte Verbrennungswärme mit der Pumpe 80 über den Wärmetauscher 79 umgewälzt. Auf der Sekundärseite im Gegenstromverfahren wird ein anderes Fluid, insbesondere ein Öl, mit der Pumpe 77 umgewälzt, wobei diese Flüssigkeit im wesentlichen die Verbrennungswärme vom Motor aufnimmt. Die mit der steigenden Temperatur relativ stark ausdehnende Flüssigkeit wird im Pufferspeicher 73, vorzugsweise unter dem Fahrzeugboden angeordnet, vorgelagert. Das Steuer- und RegelGerät 27 überwacht die Vorrichtung und die Sicherheitskriterien. Ab einem bestimmten Druckwert, aufgenommen durch den Druckmesser 67 wird das Absperrventil 68 eingeschaltet. Die Druckflüssigkeit strömt mit relativ hoher Geschwindigkeit in die Stahldruckflaschen 60, 61 und 62, die ebenfalls unter dem Fahrzeugboden befestigt sind.

Während der Einströmungsphase wird im richtigen Zeitpunkt das Ventil 64 freigegeben und eine genau dosierte Ölmenge mit relativ kleinem Druck, gemessen durch den Druckmesser 66, fliesst mit der Sogkraft vom Sammel- u. Ausgleichsbehälter 65, vorteilhafterweise ebenfalls unter dem Fahrzeugboden angeordnet, in den Pufferspeicher 73 zur Flüssigkeitsergänzung. Das Ventil 68 wird wieder abgesperrt.

Die oben beschriebenen Erwärmungs- und Ladephasen wiederholen sich so lange, bis in den Druckflaschen 60 bis 62 der erforderliche durch den Druckmesser 63 feststellbare Druckwert erreicht worden ist. Das Steuer- und Regelgerät 27, vorzugsweise mit mehrfacher, insbesondere zweifacher Redundanz, so dass Ausfälle einer Schaltung durch eine weitere Schaltung kompensiert werden können, schaltet nach einer vorgehenden Prüfung der zum anderen Ausführungsbeispiel genannten Sicherheitsfunktionen und unter Berücksichtigung der Betriebsabläufe (insbesondere Stop- und Fo-Betrieb, Talfahrt beziehungsweise Bremsen, abgestellter Motor) das Ventil 74 ein.

Das aus den Flaschen 60, 61 und 62 strömende Öl durchströmt mit relativ hohem Druck und genügender Menge den Hydromotor 22 und fliesst in den Sammel- und Ausgleichsbehälter 65 zurück, um wiederholt den neuen Kreislauf zu beginnen. Der Hydromotor 22 dreht mit und gibt seine Antriebsenergie an das Getriebe 18 weiter, wobei seine Funktion mit sich verändernden Intervallen abläuft. Massgebende Parameter sind der Druck und die Menge.

Anstelle eines Wärmeeintrags durch Solarenergie wird hier die Abwärme des herkömmlichen Motors eingesetzt. Dies entspricht der gleichen Vorgehensweise wie bei dem Ausführungsbeispiel nach den Fig. 1 und 2 und alle Prinzipien der dortigen Beschreibung lassen sich auch hier anwenden und umgekehrt. Insbesondere können mehrere getrennte Druckflaschen 60, 61 und 62 beladen und über eine Verteileinheit der gespeicherte Druck dem Hydromotor 22 zugänglich gemacht werden. Ein Generator kann dem Hydromotor 22 zugeschaltet werden, um die Bordelektrizität zu erzeugen.

Die Anwendung ist natürlich nicht auf Kraftfahrzeuge beschränkt. Sie kann auf Schienenfahrzeuge, Schiffe oder Flugzeuge ebenfalls angewendet werden. Das Ausführungsbeispiel ist insbesondere vorteilhaft, da ein sich bewegendes Fahrzeug in bezug auf die Energieumwandlung per se eine "Insel" darstellt, für die diese unabhängige Umwandlungseinheit besonders vorteilhaft ist.

Ferner ist bei einem Kraftfahrzeug auch eine Energieerzeugung mit der Verzögerungs-Energie möglich. Man spricht bei einem Kraftfahrzeug von dem Bestehen von Verzögerungs-Energie, wenn der Motor keine Kraftstoffzufuhr erfährt, also insbesondere das Gaspedal nicht betätigt ist und somit eine Funktion einer Motorbremse vorliegt.

Diese Art der Energieerzeugung kann optional als ein willkommener Zusatz zur Energieerzeugung mit der Motorverlustwärme eingesetzt werden. Die Fahrtverzögerung ist wie bekannt eine oft vorkommende Begleiterscheinung im Strassenverkehr. Am meisten tritt sie bei Bergabfahrten, beim Gas-Wegnehmen und beim Bremsen des Fahrzeugs auf. Dieser wertvolle Energieanteil wird bis heute bei leichten Fahrzeugen mechanisch vernichtet und geht somit ungenutzt verloren.

Die Erfindung ermöglicht eine energetisch und wirtschaftlich sinnvolle Benutzung dieser Energiekomponente. Die Arbeitsweise einer entsprechenden Vorrichtung nach einem Ausführungsbeispiel ist wie folgt.

Beim Pumpbetrieb, das heisst dem Aufladen Druckspeicher 60, 61, 62, der immer prioritär abläuft, nimmt ein Fahrer eines Kraftfahrzeuges nun seinen Fuss vom Gaspedal. Das Regel- und Steuergerät 27 überwacht kontinuierlich die Funktionsabläufe. Wenn bestimmte Betriebsbedingungen erfüllt sind, beispielsweise Temperatur des Hydromotors 22, Druck der Leckölleitung des Hydromotors, Drehzahl des Hydromotors, Druck in den Flaschen 60, 61, und 62, und wenn nach zum Beispiel fünf Sekunden das Bremspedal nicht betätigt ist, wird der Hydromotor 22 als Hydropumpe umgeschaltet. Anschliessend und nach einer sehr kurzen Zeit wird das Absperrventil 74 freigegeben. Das Öl, das sich im Sammel- und Ausgleichsbehälter 5 befindet, wird angesaugt und anschliessend in die Stahldruckflaschen 60, 61 und 62 unter Druck eingefüllt.

Die Kompressibilität des Inhaltes von den hier drei Druckflaschen ist hauptsächlich von der Drehzahl des Hybridantriebs und der Pumpdauer abhängig. Wenn der erwünschte Fülldruck von grösser gleich 300 bar erreicht ist oder gezwungenerweise dieser Betriebsablauf unterbrochen wird, wird zuerst das Ventil 74 und nach sehr kurzer Zeit die Hydropumpe 22 abgeschaltet. Der Blasenspeicher 76 eliminiert dabei die hydraulischen Schläge weitgehend. Die oben beschriebene Betriebsart ist die als am effizientesten angesehene Lösung für die Energierückgewinnung in einem Ausführungsbeispiel der Erfindung.

Die Energierückgewinnung mit der Verlustwärme von einem Verbrennungsmotor kombiniert mit der Ausnützung der Verzögerungsenergie vom gleichen Fahrzeug eröffnet neue Horizonte mit erheblichen Vorteilen:
- die Abstrahlungswärme des Motors wird sinnvoll genutzt,
- die Verzögerungsenergie vom Fahrzeug wird effizient eingesetzt,
- der Gesamtwirkungsgrad des Motors wird damit erheblich gesteigert,
- der Kraftstoffverbrauch kann bei gleicher Leistung erheblich reduziert werden, was dem Umweltschutz und der Verminderung des CO2-Ausstosses zugute kommt,
- Kilometer- bzw. Fahrtkosten werden erheblich reduziert,
- das Bremsverhalten vom Fahrzeug wird verbessert,
- die Lebensdauer von Bremsen und Kupplung werden verlängert,
- die Kaltlaufeigenschaften in bezug auf Verbrauchs- und Verschleissminderung von Motoren werden erheblich verbessert, weil Motorstillstandwärme effizient gespeichert wird, denn ein Kraftfahrzeugmotor verbraucht je nach Jahreszeit und Lufttemperatur in der Warmlaufphase (5 bis ca. 15 Minuten Dauer) bis zu 300 Prozent mehr Kraftstoff,
- bei einem Stop-and-Go-Verkehr in Staus oder in der Stadt im Schritttempo wird die Motorlaufzeit beziehungsweise die Anzahl von Starts und Stops vermindert (Verbrauch- und Verschleissminderung ä Umweltschutz, Reparaturanfälligkeit),

Die Energierückgewinnung nach dem Ausführungsbeispiel der Erfindung vermeidet all die oben genannten Nachteile.

Als Hydraulikflüssigkeiten kommen verschiedene Öl- und Flüssigkeitssorten in Betracht. Als nicht beschränkende Auswahl werden Hydrauliköle der Klassen HL und HLP und Druckflüssigkeiten nach DIN 51502 ( Gruppen HFC, HFA und HFD ) sowie Wärmetauscheröle genannt. Prinzipiell ist die Vorrichtung auch mit Fluiden in Gestalt von Gasen betreibbar. Dabei wird aber ein schlechterer Wirkungsgrad auftreten.

Der Viskositätsbereich der Flüssigkeiten kann beispielsweise zwischen minimal 10 cSt und maximal 300 cSt ( 1 cSt = 1 mm²/s ) betragen. Es können aber auch Flüssigkeiten mit Viskositäten von 400 cSt und mehr eingesetzt werden.

Die Flüssigkeiten im Primärkreislauf können in verschiedenen Druckbereichen betrieben werden, wobei in den Ausführungsbeispielen folgende Druckbereiche Verwendung gefunden haben. Beim Ausführungsbeispiel mit dem Solarkollektor in einer Solar-WKK-Einrichtung zwischen 15 und 200 bar. Beim Energiespeicher können Drücke zwischen 15 und 250 bar eingesetzt werden. Bei der Energierückgewinnung sind insbesondere Drücke von 50 bis 300 bar einsetzbar.

Als Hydromotoren können verschiedenste Typen eingesetzt werden, beispielsweise Aussenzahnrad-Motoren mit einem Schluckvermögen-Bereich zwischen 1.2 und 5 cm³/ Umdrehung (je nach Anlagengrösse) oder Innenzahnrad-Motoren/Pumpen mit einem Schluckvermögen-Bereich zwischen 5.1 und 10 cm³/ Umdrehung (je nach Anlagengrösse) und bei der Energierückgewinnung können Volumina ab 10 cm³/ Umdrehung eingesetzt werden. Für andere Anwendungsfälle können auch Axialkolbenmotoren eingesetzt werden.

## Patentansprüche

1. Vorrichtung zur Umwandlung von Wärmeenergie in eine andere Energieform (14)
- mit mindestens einem Wärmeeintrags- und Druckspeichermodul (100), das jeweils aufweist:
-- eine einen Wärmeeintrag übermittelnde Einrichtung (1) und
-- einen Druckspeicher (2),
wobei besagte Einrichtung (1) und Druckspeicher (2) zum Austausch von Fluid miteinander verbunden sind (30),
- mit einer ersten Energiewandlungseinrichtung (14), die mit dem Druckspeicher (2) des Wärmeeintrags- und Druckspeichermoduls (100) zum Austausch von Fluid verbunden ist, mit der die als Fluiddruck in dem Wärmeeintrags- und Druckspeichermodul aufbaubare Energie in die besagte andere Energieform (14) umwandelbar ist,
**dadurch gekennzeichnet, dass** die erste Energiewandlungseinrichtung eine hydraulische Hebespeichervorrichtung (17, 14) oder eine drehmomentspeichernde Vorrichtung ist und dass eine zweite Energiewandlungseinrichtung vorgesehen ist, die zwischen der einen Wärmeeintrag übermittelnden Einrichtung (1) und der ersten Energiewandlungseinrichtung (14) in Gestalt eines Hydromotor (5) vorgesehen ist, der zusätzlich mit einem Generator (6) zur Stromerzeugung verbunden ist, und dass mit dem Hydromotor (5) einerseits, bei einem Energieeintrag aus der einen Wärmeeintrag übermittelnden Einrichtung (1), direkt der Generator (6) antreibbar ist und andererseits, ohne einen Energieeintrag aus der einen Wärmeeintrag übermittelnden Einrichtung (1), der Hydromotor aus der ersten Energiewandlungseinrichtung (14) speisbar ist.

2. Vorrichtung nach Anspruch 1, **dadurch gekennzeichnet, dass** mehrere Wärmeeintrags- und Druckspeichermodule (100) vorgesehen sind, die mit einer Verteilereinheit (40) verbunden sind, mit der intermittierend die einzelnen Wärmeeintrags- und Druckspeichermodule (100) mit der ersten Energiewandlungseinrichtung (5, 6; 14, 17) verbindbar sind.

3. Vorrichtung nach einem der Ansprüche 1 oder 2, **dadurch gekennzeichnet, dass** ein Wärmetauscher (35) an die erste Energiewandlungseinrichtung angeschlossen ist und dass der Wärmetauscher (35) über eine Umwälzpumpe (9) mit der einen Wärmeeintrag übermittelnden Einrichtung (1) verbunden ist.

4. Vorrichtung nach Anspruch 3, **dadurch gekennzeichnet, dass** zwischen Wärmetauscher (35) und Umwälzpumpe (9) ein Entschäumungs- und Entfeuchtungs-Reservoir (19) vorgesehen ist.

5. Vorrichtung nach einem der Ansprüche 1 bis 4, **dadurch gekennzeichnet, dass** die einen Wärmeeintrag übermittelnde Einrichtung (1; 21) ein Solarkollektor (1) ist.

6. Vorrichtung nach einem der Ansprüche 1 bis 5, **dadurch gekennzeichnet, dass** die hydraulische Hebespeichervorrichtung (17, 14) über ein Gewicht (14), Führungsschienen und Rastelemente (15) verfügt, wobei die erreichte einer Energiespeicherung entsprechende Höhenposition des Gewichts (14) mit Hilfe der in die Führungsschienen einklinkenden Rastelemente (15) absicherbar ist.

7. Vorrichtung nach Anspruch 6, **dadurch gekennzeichnet, dass** der Druckspeicher (2) über einen Sekundärspeicher (50) verfügt, der mit einem Sammelbehälter (55) verbunden ist, um die Vorrichtung mit Fluid zu versorgen, wenn Fluid beim Anheben des Gewichts in der hydraulischen Hebespeichervorrichtung (17, 14) eingetreten ist.

8. Vorrichtung nach einem der Ansprüche 1 bis 7, **dadurch gekennzeichnet, dass** die hydraulische Hebespeichervorrichtung eine Hubvorrichtung (120), bestehend aus Gewindeleitstange (121) und Hydromotor (123), vorzugsweise mit angeflanschtem Untersetzungsgetriebe (122), umfasst.

## Claims

1. An apparatus for converting thermal energy to another energy form (14)
- having at least one heat input and accumulator module (100), which in each case has:
-- a device (1) transmitting a heat input, and
-- an accumulator (2),
said device (1) and accumulator (2) being connected to one another (30) for the exchange of fluid,
- having a first energy conversion device (14), which is connected to the accumulator (2) of the heat input and accumulator module (100) for the exchange of fluid, by means of which energy conversion device the energy which can be built up as fluid pressure in the heat input and accumulator module (100) can be converted to said other energy form (14),
**characterized in that** first energy conversion device (14) is a hydraulic lifting apparatus (17, 14) or a torque-storing apparatus, and **in that** a second energy conversion device is provided, being positioned between the device (1) transmitting a heat input and the first energy conversion device (14), as an hydraulic motor (5) being connected with a generator (6) for current generation purposes, and **in that** on the one hand the generator (6) is directly powered by the hydraulic motor (5) when there is a power input from the device (1) transmitting a heat input, and on the other hand the hydraulic motor (5) is fed from the first energy conversion device (14) when there is no power input from the device (1) transmitting a heat input.

2. The apparatus as claimed in claim 1, **characterized in that** a plurality of heat input and accumulator modules (100) are provided which are connected to a distribution unit (40), by means of which the individual heat input and accumulator modules (100) can be connected intermittently to the energy conversion device (5, 6; 14, 17).

3. The apparatus as claimed in one of claims 1 or 2, **characterized in that** a heat exchanger (35) is connected to the first energy conversion device, and **in that** the heat exchanger (35) is connected to the device (1) transmitting a heat input via a circulation pump (9).

4. The apparatus as claimed in claim 3, **characterized in that** a defoaming and dehumidifying reservoir (19) is provided between the heat exchanger (35) and the circulation pump (9).

5. The apparatus as claimed in one of claims 1 to 4, **characterized in that** the device (1; 21) transmitting a heat input is a solar collector (1).

6. The apparatus as claimed in one of claims 1 to 5, **characterized in that** the hydraulic lifting apparatus (17, 14) comprises a weight (14), guide rails and pawls (15), wherein the achieved height position of the weight (14), being representative for the energy storage, is hedged through the pawls (15) engaging the guide rails.

7. The apparatus as claimed in claim 6, **characterized in that** the accumulator (2) comprises a secondary store (50) being connected with a collecting tank (55) for supplying fluid to the apparatus, when fluid has entered into the hydraulic lifting apparatus (17, 14) during lifting of the weight.

8. The apparatus as claimed in one of claims 1 to 7, **characterized in that** the hydraulic lifting apparatus (17, 14) comprises a lifting apparatus (120), having a threaded guide rod (121) and a hydraulic motor (123), preferably comprising a flange-connected reduction gear (122).

## Revendications

1. Dispositif d'accumulation d'énergie thermique pour la conversion de celle-ci dans une autre forme d'énergie (14), comprenant
- au moins un module d'introduction thermique et d'accumulation (100), qui comprennent à chaque fois :
- un dispositif (1) transmettant de l'énergie thermique et
- un accumulateur hydraulique (2),
où ledit dispositif (1) et l'accumulateur hydraulique (2) sont connectés l'un avec l'autre (30) pour un échange de fluides,
- un premier dispositif de conversion d'énergie (14), qui est connecté avec l'accumulateur hydraulique (2) du module d'introduction thermique et d'accumulation (100) pour l'échange de fluides, où ledit dispositif de conversion d'énergie permet de transformer la pression du fluide dans le module d'accumulateur hydraulique (100) dans ledit autre forme d'énergie (14),
**caractérisé en ce que** le premier dispositif de conversion d'énergie (14) est un dispositif de levage hydraulique (17, 14) ou un dispositif de stockage de couple et **en ce qu'**un deuxième dispositif de conversion d'énergie est prévue qui est prévue entre le premier dispositif transmettant de l'énergie thermique et le premier dispositif de conversion d'énergie (14) dans la forme d'un moteur hydraulique (5), qui est aussi connecté avec un générateur (6) pour la génération de courant, et **en ce que**, d'une part, le générateur (6) est directement propulsé par le moteur hydraulique (5) quand il y a une introduction d'énergie du dispositif (1) transmettant de l'énergie thermique, et, d'autre part, le moteur hydraulique (5) est alimenté par le premier dispositif de conversion d'énergie (14), quand il n'y a pas d'introduction d'énergie du dispositif (1) transmettant de l'énergie thermique.

2. Dispositif selon la revendication 1, **caractérisé en ce qu'**une pluralité de modules d'accumulateurs hydrauliques (100) sont prévus qui sont connectés à une unité de distribution (40), permettant de connecter les modules d'accumulateur hydrauliques (100) avec le premier dispositif de conversion d'énergie (5, 6 ; 14, 17) d'une manière intermittente.

3. Dispositif selon la revendication 1 ou 2, **caractérisé en ce qu'**un échangeur thermique (35) est connecté au dispositif de conversion d'énergie et **en ce que** l'échangeur thermique (35) est connecté au dispositif (1) transmettant de l'énergie thermique par une pompe de circulation (9).

4. Dispositif selon la revendication 3, **caractérisé en ce qu'**un réservoir (19) de déshumidification et de antimoussant est prévu entre l'échangeur thermique (35) et la pompe de circulation (9).

5. Dispositif selon l'une quelconque des revendications 1 à 4, **caractérisé en ce que** le dispositif (1) transmettant de l'énergie thermique comprend un capteur solaire (1).

6. Dispositif selon l'une quelconque des revendications 1 à 5, **caractérisé en ce que** le dispositif de levage hydraulique (17, 14) comprend un poids (14), des rails de guidage et des éléments à cran (15), où la position résultante du poids (14) en hauteur correspondant au stockage d'énergie peut être sécurisée avec l'aide des éléments a crans (15) qui s'engagent dans les rails de guidage.

7. Dispositif selon la revendication 6, **caractérisé en ce que** l'accumulateur (2) comprend un stockage secondaire (15) qui est connecté avec le réservoir de collecte (55) pour alimenter le dispositif avec du fluide, quand le fluide est entré dans le dispositif de levage hydraulique (17, 14) quand le poids est levé.

8. Dispositif selon l'une quelconque des revendications 1 à 7, **caractérisé en ce que** le dispositif de levage hydraulique est un dispositif de levage (120) comprenant une barre de guidage fileté (121) et un moteur hydraulique (123), préférablement comprenant un engrenage de réduction bridé (122).
